# FASCICULE DE BREVET EUROPEEN

(11) **EP 1 018 463 B1**
(45) Date de publication et mention de la délivrance du brevet: **12.03.2003**
(21) Numéro de dépôt: 99403144.1
(22) Date de dépôt: 14.12.1999
(51) Int. Cl.: B62D 1/19

(54) **Dispositif d'absorption modulable d'énergie d'une colonne de direction de véhicule automobile**
Modulierbare Kraftfahrzeug-Lenksäulen- Energieabsorptionseinrichtung
Adjustable motor vehicle steering column energy absorbing mechanism

(30) Priorité: 06.01.1999 FR 9900169
(43) Date de publication de la demande: 12.07.2000
(73) Titulaire: NACAM France S.A., F-41100 Vendôme (FR)
(72) Inventeur: Ben Rhouma, Abdel Karim, 41100 Vendome (FR); Duval, Benoît, 41100 Vendome (FR); Gallou, Laurent, 41100 Vendome (FR)
(74) Mandataire: Chassagnon, Jean-Alain

(56) Documents cités:
- DE-A- 19 510 615
- ANONYMUS: "COMPUTER CONTROLLED ENERGY ABSORBING STEERING COLUMN FOR AUTOMOTIVE USE" RESEARCH DISCLOSURE, no. 359, 1 mars 1994 (1994-03-01), pages 157-159, XP000440547 INDUSTRIAL OPPORTUNITIES LTD. HAVANT., GB ISSN: 0374-4353

## Description

La présente invention se rapporte à un dispositif d'absorption modulable d'énergie pour colonne de direction de véhicule automobile, selon le préambule de la revendication 1. DE 195 10 615 sert de base pour la présentation en deux parties de cette revendication.

Le dispositif selon l'invention s'applique notamment à une colonne de direction réglable en profondeur ou en inclinaison ou bien à une colonne de direction réglable en profondeur et en inclinaison, dont l'arbre de direction est monté dans un tube-corps, qui est supporté et bloqué sur la carrosserie à la position voulue. La colonne de direction comprend un arbre de direction monté tournant dans un tube-corps, qui est relié à un ensemble support fixé au châssis du véhicule ou à un élément de la carrosserie. L'invention peut s'appliquer également à une colonne de direction non réglable ; dans ce cas, le tube-corps est monté directement dans l'ensemble support.

L'amélioration croissante de la sécurité sur les colonnes de direction demande aux constructeurs de maîtriser tous les paramètres des systèmes d'absorption d'énergie. Ainsi, en ce qui concerne le procédé d'absorption d'énergie au moyen de déroulement d'un fil, qui est de plus en plus sollicité sur les colonnes de direction, il est envisagé de moduler cette absorption d'énergie.

Aujourd'hui, les systèmes d'absorption d'énergie sur les colonnes de direction sont statiques et ne tiennent pas compte des conditions pendant lesquelles le choc arrive. Une fois installés sur la colonne de direction, ces systèmes possèdent des caractéristiques figées et réagissent lors du choc selon des lois physiques inchangeables. Sachant que la quantité d'énergie qui doit être absorbée par la colonne de direction lors d'un accident varie selon différents paramètres, tels que notamment la vitesse du véhicule, le poids du conducteur et le fait qu'il soit ceinturé ou non, et constatant les limites des systèmes actuels, il est nécessaire de penser à l'utilisation de systèmes plus intelligents, pour augmenter leurs performances et adapter leurs comportements aux conditions du choc.

Le but de la présente invention est de proposer un dispositif d'absorption modulable d'énergie, qui mette en oeuvre des fils de forme simple et facile à réaliser, tout en permettant d'absorber exactement l'énergie à dissiper qui est demandée, et tout en se montant facilement dans l'encombrement des colonnes de direction existantes. Un autre but de cette invention consiste à élaborer un système électromécanique capable de contrôler l'absorption d'énergie sur une colonne de direction lors d'un accident, en fonction de différents paramètres, comme notamment le poids du conducteur, la mise ou non de la ceinture, la vitesse du véhicule lors du choc.

Selon un mode de réalisation, l'invention se rapporte à un dispositif d'absorption modulable d'énergie d'une colonne de direction de véhicule automobile, qui comprend un arbre de direction monté tournant dans un tube corps. Le tube-corps est relié à un ensemble support qui est fixé au châssis du véhicule. Le dispositif d'absorption modulable d'énergie agit dans une direction sensiblement parallèle à l'axe de direction de la colonne de direction.

Un élément support fixe est solidaire du châssis du véhicule, et un élément support mobile est relié à l'élément support fixe afin de constituer l'ensemble support. L'élément support mobile est relié et bloqué sur l'élément support fixe à une valeur déterminée afin que ce blocage cesse en cas de choc.

Le système d'absorption modulable d'énergie comporte :
- l'ensemble support,
- au moins un axe de tenue,
- au moins un axe d'accrochage,
- plusieurs enroulements d'absorption d'énergie,
- au moins une tige de maintien constituant l'axe de tenue ou l'axe d'accrochage.

Chaque axe de tenue est sensiblement perpendiculaire à l'axe de direction de la colonne, et il est disposé dans l'élément support fixe.

Chaque axe d'accrochage sensiblement perpendiculaire à l'axe de direction de la colonne, et il est disposé dans l'élément support mobile.

Les enroulements sont obtenus à partir d'un élément métallique de section déterminée ronde ou carrée, lesdits enroulements étant reliés aux axes de tenue et d'accrochage correspondants.

Les enroulements sont montés sur un ou des rouleaux disposés sur l'axe de tenue correspondant solidaire de l'élément support fixe.

Les enroulements ont chacun une extrémité libre, qui s'amarre à l'axe d'accrochage correspondant qui est disposé à l'extrémité de l'élément support mobile, ladite extrémité étant du côté du boîtier de direction, c'est-à-dire du côté opposé au volant de direction.

Chaque axe d'accrochage correspondant des enroulements ou chaque axe de tenue correspondant des enroulements est constitué par une tige de maintien, qui est mobile suivant son axe. Ladite tige de maintien est rendue mobile par l'intermédiaire de moyens de déplacement, qui sont mis en action par des moyens de commande.

Cet agencement permet de relier l'axe d'accrochage et l'axe de tenue par un nombre voulu d'enroulements, qui peut être déterminé suivant le poids du conducteur.

Ainsi en cas de choc, l'élément support mobile, relié au tube-corps donc au volant, tire l'extrémité libre des enroulements amarrée à l'axe d'accrochage, de façon à dérouler le ou les enroulements(s) concerné(s) en absorbant l'énergie à dissiper demandée.

Avantageusement selon l'invention, les moyens de déplacement de chaque tige de maintien consistent en un actionneur électrique, qui est mis en action par des moyens de commande électrique disposés sur la planche de bord du véhicule.

L'actionneur électrique peut être un moto-réducteur ou un ensemble électromagnétique à noyau plongeur.

Dans un premier type de structure de l'invention, une tige de maintien constitue l'axe d'accrochage des enroulements correspondants. Un actionneur électrique entraîne la tige de maintien, qui est disposé à l'extrémité de l'élément support mobile. L'axe de tenue est disposé sur l'élément support fixe.

L'élément support fixe comporte deux oreilles sensiblement verticales, et entre lesquelles vient s'engager, l'élément support mobile, chacune des oreilles ayant un trou de passage de l'axe de tenue.

L'élément support mobile comporte deux portions latérales et une portion de raccordement.

Chacune des portions latérales a, à sa partie supérieure, un trou oblong de passage de l'axe de tenue, dont la longueur correspond à la course de la récupération d'énergie.

Trois enroulements sont montés sur un rouleau, qui est disposé autour de l'axe de tenue. Chaque enroulement est muni d'une portion rectiligne ayant sensiblement la même direction que l'effort à amortir, et chaque portion rectiligne se prolonge par une extrémité libre recourbée autour de la tige de maintien.

Dans ce premier type de structure, l'axe de tenue est constitué par une tige avec un manchon, qui est disposé entre les deux portions latérales de l'élément support mobile. Ladite tige est maintenue à chacune de ses deux extrémités par un ensemble de fixation dans l'oreille correspondante de l'élément support fixe, et par un ensemble de coulissement de l'élément support mobile. Chaque ensemble de fixation est bloqué sur chacune des oreilles à une valeur déterminée.

Chaque ensemble de fixation comprend une rondelle de serrage qui est disposé entre le manchon et l'oreille correspondante de l'élément support fixe, ladite rondelle de serrage est munie d'un tube traversant le trou oblong de la portion latérale correspondante de l'élément support mobile.

Une extrémité filetée correspondante de la tige traverse le tube de la rondelle de serrage, et traverse le trou de passage de l'oreille correspondante pour recevoir un écrou de serrage, qui s'applique sur ladite oreille afin d'assurer le blocage de l'ensemble de fixation à une valeur déterminée.

Chaque ensemble de coulissement comporte une rondelle externe avec une protubérance carrée, et une rondelle interne munie d'un trou carré qui reçoit ladite protubérance carrée.

La protubérance carrée a un trou de passage du tube de la rondelle de serrage.

La rondelle externe est disposée entre l'oreille correspondante de l'élément support fixe et la portion latérale correspondante de l'élément support mobile.

La rondelle interne est disposée entre ladite portion latérale et la rondelle de serrage. De plus, la protubérance carrée traverse et coulisse dans le trou oblong correspondant de l'élément support mobile.

Dans une variante de réalisation, la tige a une de ses deux extrémités qui est constituée par une extrémité filetée et l'autre extrémité qui est constituée par une tête s'appliquant sur l'oreille correspondante de l'élément support fixe.

Dans le premier type de structure, l'axe d'accrochage est constitué par la tige de maintien avec son actionneur électrique, qui est disposé et fixé sur la face d'appui externe de l'élément d'appui mobile.

Ladite tige de maintien traverse un trou de passage de chacune des portions latérales de l'élément d'appui mobile. De plus, la tige de maintien est supportée par deux paliers appartenant à un étrier monté et fixé sur la portion de raccordement, de l'extrémité de l'élément support mobile.

Un élément de fermeture de l'étrier entoure l'extrémité de l'élément support mobile, l'étrier et les extrémités libres des enroulements. Cet élément de fermeture est assemblé avec l'élément support mobile et l'étrier.

Dans un deuxième type de structure de l'invention, une tige de maintien constitue l'axe de tenue des enroulements correspondants. Un actionneur électrique entraîne la tige de maintien qui est disposé dans l'élément support fixe. L'axe d'accrochage est disposé à l'extrémité de l'élément support mobile.

L'élément support fixe comporte deux oreilles sensiblement verticales, et entre lesquelles vient s'engager, l'élément support mobile, chacune des oreilles ayant un trou de passage de l'axe de tenue.

L'élément support mobile comporte deux portions latérales et une portion de raccordement. Chacune des portions latérales a, à sa partie supérieure, un trou oblong de passage de l'axe de tenue, dont la longueur correspond à la course de la récupération d'énergie.

Trois enroulements sont montés chacun sur un rouleau, qui est disposé autour de la tige de maintien. Chaque enroulement est muni d'une portion rectiligne ayant sensiblement la même direction que l'effort à amortir, et chaque portion rectiligne se prolonge par une extrémité libre recourbée autour de l'axe d'accrochage. Les trois rouleaux sont montés sur un tube dans lequel coulisse la tige de maintien.

Dans ce deuxième type de structure, l'axe de tenue est constitué par la tige de maintien avec son actionneur électrique, qui est disposé et fixé sur la face externe de l'oreille correspondante de l'élément d'appui fixe.

L'axe de tenue est réalisé à chacune de ses extrémités par un ensemble de fixation dans l'oreille correspondante de l'élément support fixe ; et par un ensemble de coulissement de la portion latérale correspondant de l'élément support mobile. Chaque ensemble de fixation est bloqué sur chacune des oreilles à une valeur déterminée. La tige de maintien traverse ou s'engage dans l'ensemble de fixation correspondant.

Chaque ensemble de fixation comprend un tube métallique, qui traverse le trou oblong de la portion latérale correspondante de l'élément support mobile ; et qui traverse le trou de passage de l'oreille correspondante.

Un évasement interne est agencé sur ledit tube du côté de ladite portion latérale et un évasement externe est agencé du côté de ladite oreille ; afin d'assurer le blocage de l'ensemble de fixation. Un trou de passage de la tige de maintien est réalisé dans le tube.

Chaque ensemble de coulissement comporte une rondelle externe et une rondelle interne.

La rondelle externe a une demi-protubérance carrée et un trou de passage.

La rondelle interne a une demie-protubérance carrée et un trou de passage.

Chaque demie-protubérance s'emboîte dans l'autre rondelle à l'aide de tenon rentrant dans des trous pour former une protubérance carrée.

La rondelle externe est disposée entre l'oreille correspondante de l'élément support fixe et la portion latérale correspondante de l'élément support mobile.

La rondelle interne est disposée entre ladite portion latérale et l'évasement interne du tube métallique.

La protubérance carrée traverse et coulisse dans le trou oblong correspondant de la portion latérale de l'élément support mobile.

De plus, la tige de maintien est supportée par quatre paliers appartenant à un étrier monté et fixé sous une embase de l'élément support fixe.

Dans le deuxième type de structure, l'axe d'accrochage est constitué par trois encoches demi-circulaires, qui sont aménagées au bord de la portion de raccordement appartenant à l'extrémité de l'élément support mobile. Chaque encoche reçoit l'extrémité libre de l'enroulement correspondant, ladite extrémité libre se recourbant autour de l'encoche correspondante.

Le dispositif d'absorption modulable d'énergie selon l'invention présente ainsi l'avantage d'avoir une structure simple à réaliser, avec une garantie de qualité de fabrication lorsqu'elle est réalisée en très grande série, comme c'est le cas de l'industrie automobile. De plus, le dispositif s'adapte facilement dans l'encombrement des colonnes de direction existantes. Enfin, le dispositif d'absorption modulable d'énergie permet d'adapter exactement l'absorption d'énergie à celle demandée, en tenant compte notamment du poids du conducteur, tout en préservant une même course de déroulement.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue de dessus en perspective d'une colonne de direction de véhicule automobile, qui est équipé d'un dispositif d'absorption variable d'énergie selon l'invention ;
- la figure 2 est une vue suivant II de la figure 1 ;
- la figure 3 est une coupe suivant le plan passant par les axes de tenue et d'accrochage ;
- la figure 4 est une coupe suivant IV-IV de la figure 3 ;
- la figure 5 est une coupe partielle à grande échelle de la figure 3 relative à l'axe de tenue ;
- la figure 6 est une vue éclatée en perspective correspondant à la figure 5 ;
- la figure 7 est une vue éclatée en perspective correspondant à la figure 4 ;
- la figure 8 est une vue en perspective d'un élément de la figure 4 ;
- la figure 9 est une coupe suivant IX-IX de la figure 2 d'un autre mode de réalisation de l'invention ;
- la figure 10 est une coupe suivant X-X de la figure 9 ;
- la figure 11 est une coupe partielle à grande échelle de la figure 9 relative à l'axe de tenue ;
- la figure 12 est une vue éclatée en perspective correspondant à la figure 11 ;
- la figure 13 est une vue en perspective correspondant à la figure 11 ;
- la figure 14 est une vue éclatée en perspective des figures 9 et 10.

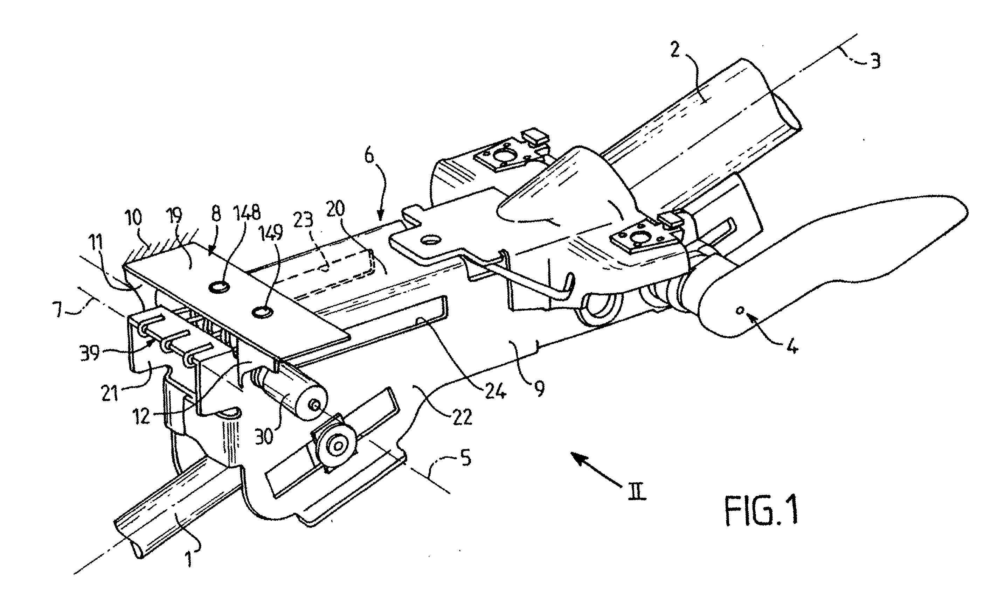

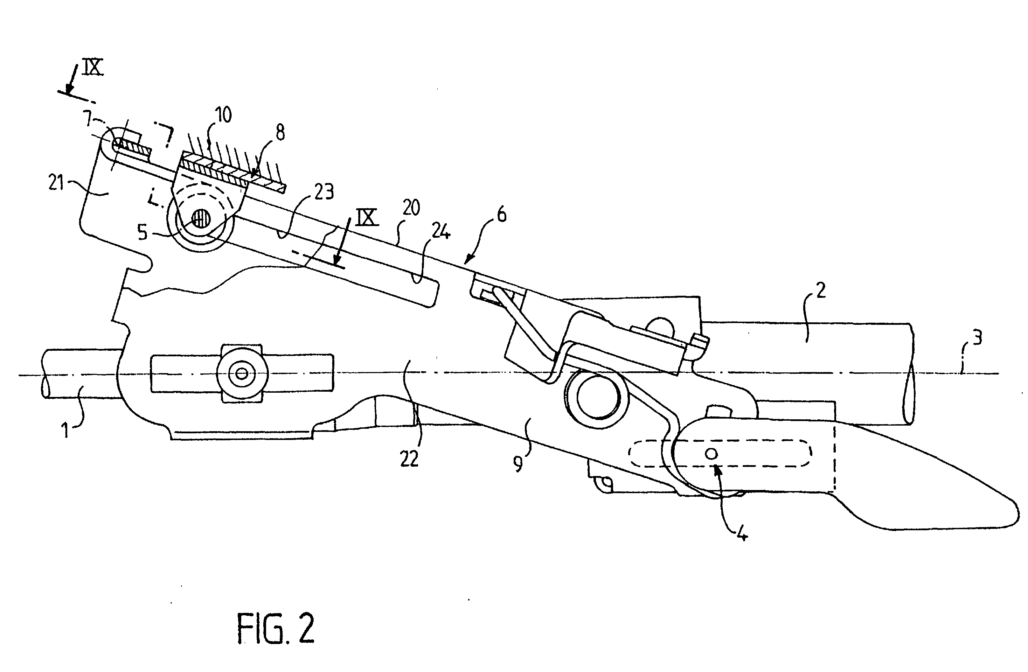

Comme on peut le voir sur les figures 1, 2, 3 et 9, la colonne de direction de véhicule automobile comprend un arbre de direction 1 qui est monté tournant dans un tube-corps 2 autour d'un axe de direction 3, comme cela est représenté sur les figures 1 et 2. Le tube-corps 2 est relié à un ensemble support 6 par un système de réglage en position 4 en profondeur ou en inclinaison, ou par un système de réglage 4 en profondeur et en inclinaison. L'invention peut s'appliquer également à une colonne de direction non réglage, dans ce cas le tube-corps 2 est relié directement à l'ensemble support 6.

L'ensemble support 6 comprend un élément support fixe 8 et un élément support mobile 9. L'élément support fixe 8 est solidaire du châssis 10 du véhicule ou d'un élément de carrosserie. L'élément support mobile 9 est relié au tube-corps 2 par le système de réglage en position 4. L'élément support mobile 9 est relié à l'élément support fixe 8, et ledit élément support mobile 9 est bloqué sur ledit élément support fixe à une valeur déterminée, qui tient compte du choc à absorber afin de permettre dans ce cas à l'élément support mobile 9 de coulisser dans l'élément support fixe 8.

L'élément support fixe 8 comporte une embase 19 avec deux oreilles 11 et 12 sensiblement verticales qui sont montées sur cette embase 19. Chacune des oreilles 11 et 12 a un trou de passage respectif 13 et 14 de l'axe de tenue de l'élément support mobile 9. Les oreilles 11 et 12 sont sensiblement parallèles à l'axe de direction 3.

L'élément support mobile 9 comporte deux portions latérales 21 et 22 sensiblement verticales et une portion de raccordement 20 sensiblement horizontale. L'élément support mobile 9 vient s'engager entre les deux oreilles 11 et 12 de l'élément support fixe 8 par l'intermédiaire de ses deux portions latérales 21 et 22, qui sont sensiblement parallèles à l'axe de direction 3.

Chacune des portions latérales 21 et 22 a, à sa partie supérieure, un trou oblong respectif 23 et 24 de passage de l'axe de tenue de l'élément support mobile 9.

La longueur de chacun de ces trous oblong 23 et 24 correspond à la course de récupération d'énergie. Chacune des portions latérales 21 et 22 a, à sa partie inférieure, un trou de passage de l'axe des systèmes de réglage 4.

Le dispositif d'absorption d'énergie modulable selon l'invention est disposé de façon à agir dans une direction sensiblement parallèle à l'axe de la colonne de direction.

Dans la suite de la description et pour un même élément, on appellera interne par rapport à l'axe de direction 3, ce qui est le plus près de cet axe de direction 3, et externe ce qui est le plus éloigné. Ainsi l'oreille 11 de l'élément support fixe 8 a une face interne 15 et une face externe 17 par rapport à l'axe de direction 3. De même, l'oreille 12 a une face interne 16, et une face externe 18 par rapport à ce même axe de direction 3.

De la même façon pour l'élément support mobile 9, la portion latérale 21 a une face interne 25 et une face externe 27, et la portion latérale 22 a une face interne 26 et une face externe 27.

Comme on peut le voir sur les figures 1, 2, 3 et 9, le dispositif d'absorption modulable d'énergie selon l'invention comporte :
- au moins un axe de tenue 5,
- au moins un axe d'accrochage 7,
- et plusieurs enroulements qui sont reliés aux axes de tenue 5 et d'accrochage 7.

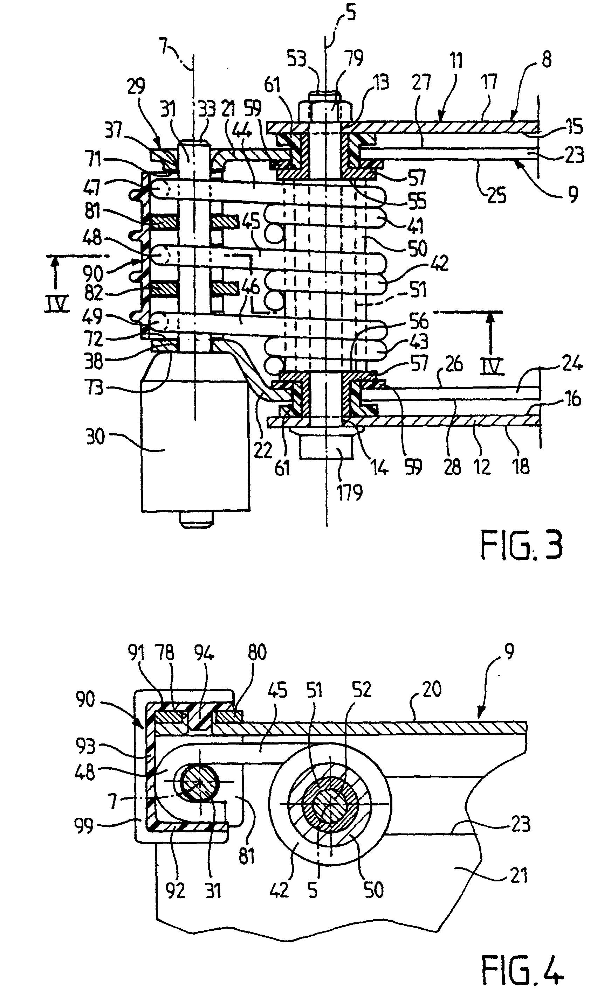

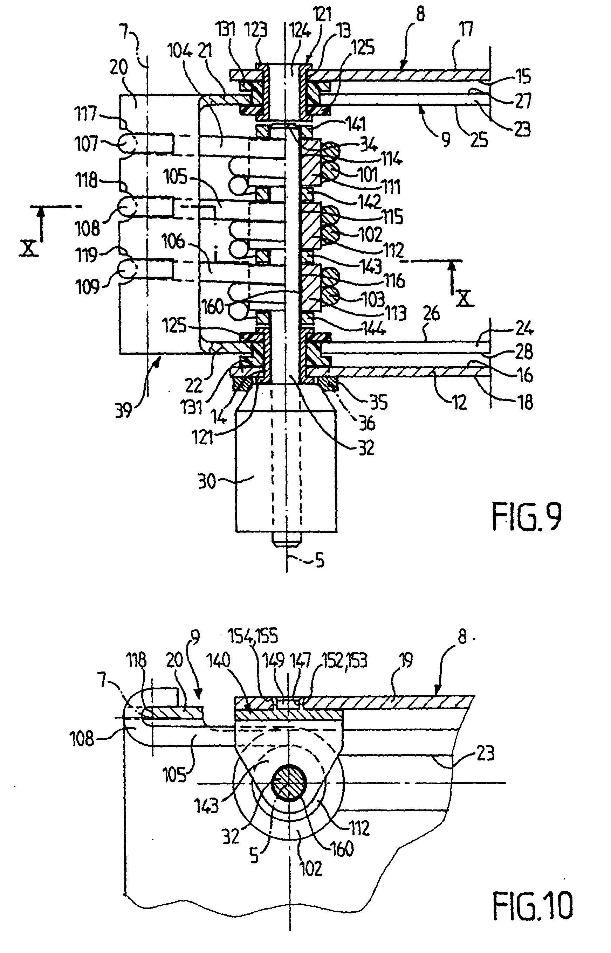

L'axe de tenue 5 est sensiblement perpendiculaire à l'axe de direction 3 de la colonne, et il est disposé dans l'élément support fixe 8. L'axe d'accrochage 7 est sensiblement perpendiculaire à l'axe de direction 3 de la colonne, et il est disposé dans l'élément support mobile 9. Les enroulements sont obtenus à partir d'un élément métallique de section déterminée, qui peut être par exemple ronde ou carrée. Dans le cas de la figure 3, les enroulements sont références 41, 42 et 43 et sont montés sur un rouleau 50, qui est disposé sur l'axe de tenue 5 correspondant solidaire de l'élément support fixe 8. Pour la figure 9, les enroulements sont références 101, 102, et 103 et ils sont montés respectivement sur un rouleau référencé 111, 112 et 113, qui est disposé sur l'axe de tenue 5 correspondant solidaire de l'élément support fixe.

Les enroulements 41, 42, 43 ont chacun respectivement une extrémité libre référencée 47, 48 et 49 qui s'amarre à l'axe d'accrochage 7 correspondant, qui est disposé à une extrémité 29 de l'élément support mobile 9. Les enroulements 101, 102, 103 ont respectivement chacun une extrémité libre 107, 108 et 109 qui s'amarre à l'axe d'accrochage 7 correspondant disposé à l'extrémité 39 de l'élément support mobile 9. L'extrémité correspondante 29 ou 39 de l'élément support mobile 9 est située du côté du boîtier de direction, c'est-à-dire du côté opposé au volant de direction.

Selon une caractéristique essentielle de l'invention, chaque axe d'accrochage 7 des enroulements, comme c'est le cas de la figure 3, où chaque axe de tenue 5 des enroulements, comme c'est le cas de la figure 9, est constitué par une tige de maintien qui est référencée respectivement 31 et 32. La tige de maintien 31 et la tige de maintien 32 sont mobiles suivant leur axe. Ce mouvement est obtenu par l'intermédiaire de moyens de déplacement, qui sont mis en action par des moyens de commande. De cette manière, il est possible selon l'invention de relier l'axe d'accrochage 7 à l'axe de tenue 5 par un nombre voulu d'enroulements, qui est déterminé suivant les caractéristiques du conducteur et notamment suivant son poids. Ainsi, en cas de choc, l'élément support 9 qui est relié au tube-corps 2 donc au volant, tire l'extrémité libre des enroulements, qui est amarrée à l'axe d'accrochage 7, de façon à dérouler le ou les enroulements en absorbant l'énergie à dissiper demandée.

Les moyens de déplacement de la tige de maintien 31 ou de la tige de maintien 32 sont constitués par un actionneur électrique 30, cet actionneur électrique 30 est mis en action par des moyens de commande électriques qui sont disposés sur la planche de bord du véhicule. Selon une variante de l'invention, cet actionneur électrique 30 peut être un moto-réducteur, ou selon une autre variante de l'invention, l'actionneur électrique 30 peut être un ensemble électromagnétique à noyau plongeur.

Un premier mode de réalisation de l'invention est représenté sur les figures 3, 4, 5, 6, 7, et 8. Dans ce premier type de structure de l'invention, la tige de maintien 31 avec son extrémité 33 constitue l'axe d'accrochage 7 des enroulements correspondants. L'actionneur électrique 30 entraîne la tige de maintien 31 qui est disposée à l'extrémité 29 de l'élément support mobile 9. L'axe de tenue 5 est disposé sur l'élément support fixe 8.

L'élément support fixe 8 a une embase 19 avec ses deux oreilles 11 et 12 qui ont un trou de passage 13 et 14 de l'axe de tenue 5. L'élément support mobile 9 comporte les deux portions latérales 21 et 22 avec la portion de raccordement 20. Chacune des portions latérales 21 et 22 a, à sa partie supérieure, un trou oblong 25 et 26 de passage de l'axe de tenue 5, dont la longueur correspond à la course de récupération d'énergie.

Trois enroulements référencés 41, 42 et 43 sont montés sur un rouleau 50. Ce rouleau 50 est disposé sur un manchon 51 autour de l'axe de tenue 5. Chaque enroulement 41, 42 et 43 est muni d'une portion rectiligne référencée respectivement 44, 45 et 46 qui a sensiblement la même direction, que l'effort à amortir. Chaque portion rectiligne 44, 45 et 46 se prolonge par une extrémité libre référencée respectivement 47, 48, et 49, qui est recourbée autour de la tige de maintien 31.

L'axe de tenue 5 est constitué par une tige 52, qui traverse l'élément support fixe 8 et l'élément support mobile 9. La tige 52 porte un manchon 51, qui est disposé entre les deux faces internes respectives 25 et 26 des deux portions latérales 21 et 22 de l'élément support mobile 9. La tige 52 est maintenue à chacune de ses deux extrémités référencées 53 et 54 par un ensemble de fixation, qui se monte sur l'oreille correspondante 11 et 12 de l'élément support fixe 8. De plus, il est agencé un ensemble de coulissement de l'élément support mobile 9 dans cet ensemble de fixation. Chaque ensemble de fixation est bloqué sur chacune des oreilles 11 et 12 à une valeur déterminée.

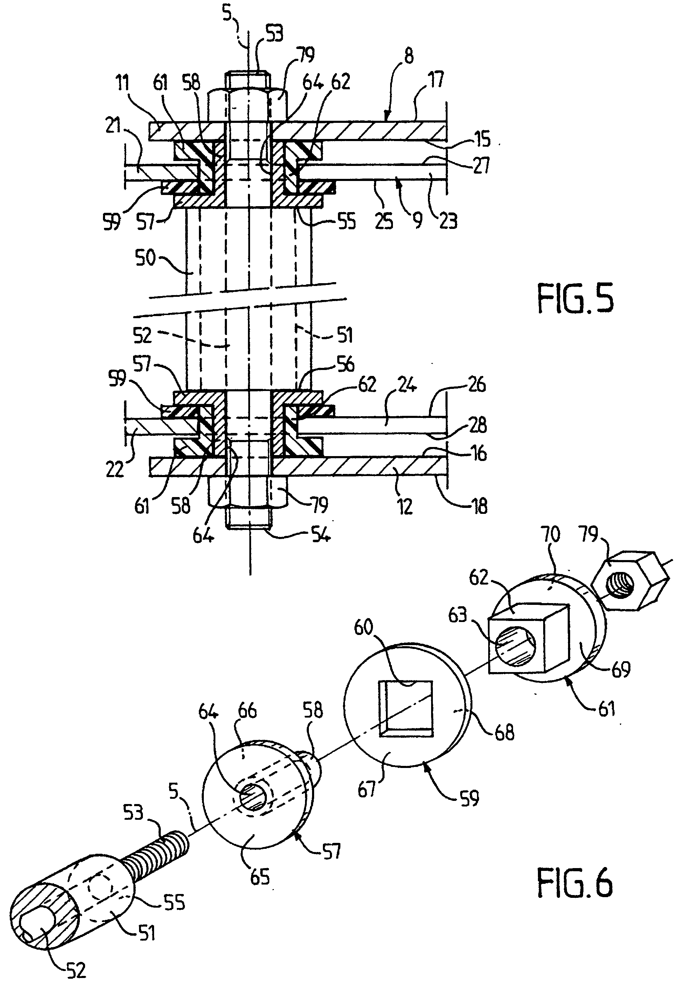

Comme on peut le voir plus précisément sur les figures 5 et 6, chaque ensemble de fixation qui est disposé à l'extrémité de la tige 52 comprend une rondelle de serrage 57. Cette rondelle de serrage 57 est disposée entre la face d'appui 55 ou 56 du manchon 51 par sa face interne 65, et la face interne correspondante 15 et 16 des oreilles 11 et 12 de l'élément support fixe 8. La rondelle de serrage 57 est munie d'un tube 58, qui traverse le trou oblong correspondant 23 et 24 de la portion latérale 21 et 22 correspondante de l'élément support mobile 9. La tige 52 est munie à chacun de ses bouts d'une extrémité filetée référencée 53 et 54, qui traverse un trou de passage 64 du tube 58 de la rondelle de serrage 57. Cette extrémité filetée 53 et 54 traverse le trou de passage 13 et 14 de l'oreille correspondante 11 et 12 pour recevoir un écrou 79 de serrage, qui s'applique sur la face externe correspondante 17 et 18 des oreilles 11 et 12, afin d'assurer le blocage de l'ensemble de fixation à une valeur déterminée.

Chaque ensemble de coulissement comporte une rondelle externe 61 avec une face interne 69 et une face externe 70 et une rondelle interne 59 avec une face interne 67 et une face externe 68. La rondelle externe 61 est munie d'une protubérance carrée 62, et la rondelle interne 59 a un trou carré 60, agencé de manière à recevoir ladite protubérance carrée 62. De plus, la protubérance carrée 62 est munie d'un trou de passage 63 du tube 58 de la rondelle de serrage 57. La rondelle externe 61 est disposée entre la face interne correspondante 16 et 18 de l'oreille 11 et 12 correspondante de l'élément support 8, et la face externe correspondante 27 et 28 de la portion latérale 21 et 22 correspondante de l'élément support mobile 9. La rondelle interne 59 est disposée entre la face interne correspondante 25 et 26 de la portion latérale 21 et 22, et la face externe 66 de la rondelle de serrage 57. La protubérance carrée 62, traverse et coulisse dans le trou oblong 23 et 24 correspondant de l'élément support mobile 9.

Dans une variante de réalisation, la tige 52 a une de ses deux extrémités, qui est constituée par une extrémité filetée 53, et l'autre extrémité qui est constituée par une tête 179 s'appliquant sur l'oreille 12 correspondante de l'élément support fixe 8, comme cela est représenté sur la figure 3.

L'axe d'accrochage 7 est constitué par la tige de maintien 31, qui est munie de son actionneur électrique 30. L'actionneur électrique 30 est disposé et fixé sur une face d'appui externe 73 de l'élément d'appui mobile 9. La tige de maintien 31 traverse un trou de passage 37 et 38 disposé respectivement sur chacune des portions latérales 21 et 22 de l'élément d'appui mobile 9. La tige de maintien 31 est supportée par deux paliers 81 et 82, qui appartiennent à un étrier 80. Cet étrier 80 est monté et fixé sur la portion de raccordement 20 de l'extrémité 29 de l'élément support mobile 9.

De plus, un élément de fermeture 90 de l'étrier 80, entoure l'ensemble formé par l'extrémité 29 de l'élément support mobile 9, par l'étrier 80, et par les extrémités libres 47, 48 et 49 des enroulements respectifs 41, 42 et 43. Cet élément de fermeture 90 est assemblé avec l'élément support mobile 9 et avec l'étrier 80.

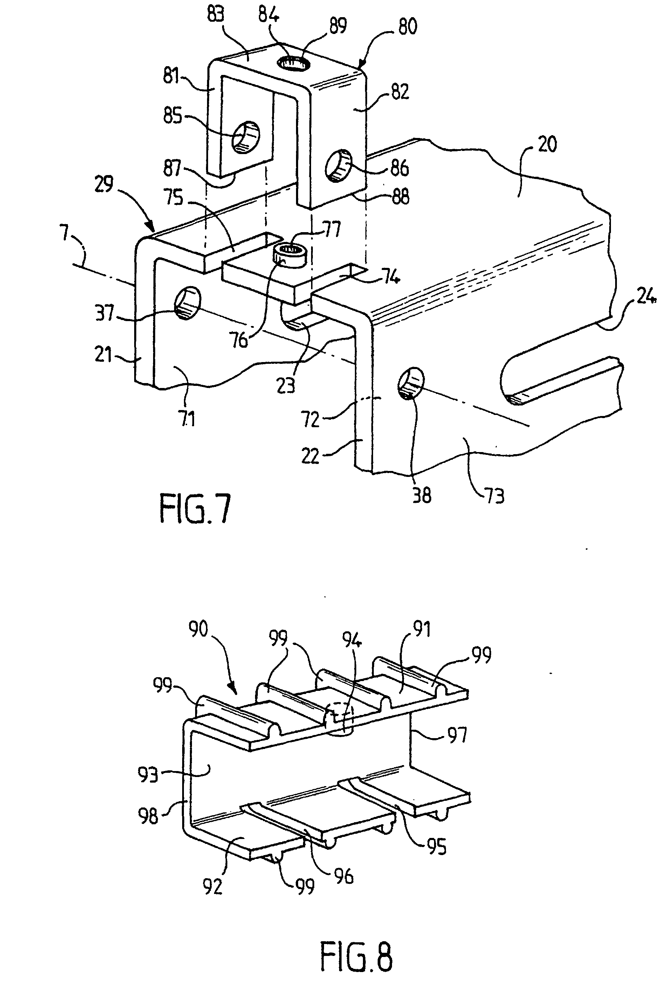

Le montage de l'étrier 80 avec l'élément de fermeture 90 est représenté en détail sur les figures 7 et 8. L'extrémité 29 de l'élément support mobile 9 est muni de deux encoches débouchantes 74 et 75, et d'un tenon 76 avec un trou 77. L'étrier 80 est composé d'une embase 83 avec un palier 81 et 82 à chacune de ses extrémités. Chaque palier 81 et 82 possède un trou 85 et 86 pour le passage et le support de la tige de maintien 31. L'embase 83 est percée d'un trou évasé 84 pour le passage du tenon 76. Les paliers 81 et 82 s'engagent dans les encoches débouchantes 74 et 75, et l'extrémité du tenon 76 est rabattue sur l'évasement 89 du trou 84 pour obtenir un évasement 78.

L'élément de fermeture 90 est composé de deux ailes 91 et 92 sensiblement parallèles, qui sont raccordées par un fond 93, avec des raidisseurs 99 à l'extérieur des deux ailes 91 et 92 et du fond 93. Deux encoches débouchantes 95 et 96 sont aménagées sur l'aile 92 et le fond 93. L'aile 91 est munie d'un tenon 94, qui s'engage dans le trou 77 du tenon 76, et les extrémités 87 et 88 des paliers 81 et 82 pénètrent dans les encoches débouchantes 95 et 96. Les faces latérales 97 et 98 de l'élément de fermeture 90 coulissent respectivement entre les faces d'appui internes 71 et 72 de l'extrémité 29 de l'élément d'appui mobile 9.

Un deuxième mode de réalisation de l'invention est représenté sur les figures 9, 10, 11, 12, 13 et 14. Dans ce deuxième type de structure de l'invention, la tige de maintien 32 avec son extrémité 34 constitue l'axe de tenue 5 des enroulements correspondants. Un actionneur électrique 30 entraîne la tige de maintien 32, qui est disposée dans l'élément support fixe 8. L'axe d'accrochage 7 est disposé à l'extrémité 39 de l'élément support mobile 9.

L'élément support fixe a un trou de passage 13 et 14 de l'axe de tenue 5, qui est disposé respectivement sur chacune des oreilles 11 et 12 solidaires de l'embase 19 de l'élément support fixe 8. L'élément support mobile 9 comporte les portions latérales 21 et 22 et la portion de raccordement 20. Chacune des portions latérales 21 et 22 a, à sa partie supérieure, un trou oblong 23 et 24 de passage de l'axe de tenue 5, dont la longueur correspond à la course de récupération d'énergie. Trois enroulements références respectivement 101, 102, et 103 sont montés chacun sur un rouleau référencé respectivement 111, 112 et 113. Chacun de ces rouleaux 111, 112 et 113 est disposé autour de la tige de maintien 32. Chacun des enroulements 101, 102 et 103 est muni d'une portion rectiligne respective 104, 105 et 106, qui a sensiblement la même direction que l'effort à amortir. Chaque portion rectiligne 104, 105 et 106 se prolonge par une extrémité libre référencée respectivement 107, 108 et 109, qui est recourbée autour de l'axe d'accrochage 7. Les trois rouleaux 111, 112 et 113 sont munis respectivement d'un trou 114, 115 et 116, et ils sont montés sur un tube mince 160, dans lequel coulisse la tige de maintien 32.

L'axe de tenue 5 est constitué par la tige de maintien 32, qui est munie dans son actionneur 30, cet actionneur électrique 30 est disposé et fixé sur la face externe 18 de l'oreille 12 correspondante de l'élément d'appui fixe 8, à l'aide d'une collerette 35 et de fixations 36. L'axe de tenue 5 est réalisé à chacune de ses deux extrémités par un ensemble de fixation, qui est disposé dans l'oreille correspondante 11 et 12 de l'élément support fixe 8. De plus, un ensemble de coulissement, de la portion latérale 21 et 22 correspondante de l'élément support 9, est agencé dans chacun de ces ensembles de fixation. Chaque ensemble de fixation est bloqué sur chacune des oreilles 11 et 12 à une valeur déterminée. De plus, la tige de maintien 32 traverse ou s'engage dans l'ensemble de fixation correspondant.

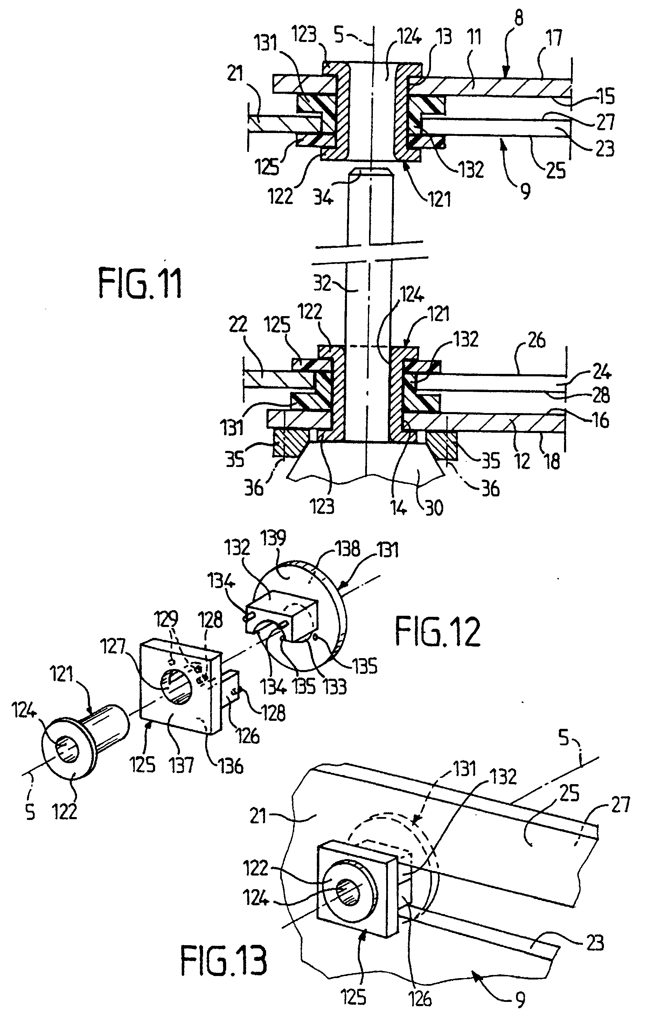

Comme on peut le voir plus précisément sur les figures 11, 12, 13 et 14, chaque ensemble de fixation comprend un tube métallique 121, qui traverse le trou oblong 23 et 24 de la portion latérale correspondante 21 et 22 de l'élément support mobile 9. De plus, ce tube métallique 121 traverse le trou de passage 13 et 14 de l'oreille 11 et 12 correspondante de l'élément support fixe 8. Un évasement interne 122 est agencé du côté de ladite portion latérale 21 et 22 correspondante, et un évasement externe 123 est agencé du côté de ladite oreille 11 et 12 correspondante, afin d'assurer le blocage de l'ensemble de fixation. Enfin, le tube métallique 121 possède un trou de passage 124 de la tige de maintien 32.

Chaque ensemble de coulissement comporte une rondelle externe 131 avec une face interne 139 et une face externe 138 et une rondelle interne 125 avec une face interne 137 et une face externe 136. La rondelle externe 131 est munie d'une demie-protubérance carrée 132 et d'un trou de passage 133. La rondelle interne 125 est également munie d'une demie-protubérance carrée 126 et d'un trou de passage 127. Chaque demie-protubérance 126 et 132 s'emboîte respectivement dans l'autre rondelle 131 et 125 à l'aide de tenons référencés respectivement 128 et 134, qui rentrent dans des trous correspondants 129 et 135 pour former une protubérance carrée.

La rondelle externe 131 est disposée entre l'oreille 11 et 12 correspondante de l'élément support fixe 8, et la portion latérale 21 et 22 correspondante de l'élément support mobile 9. La rondelle interne 125 est disposée entre la portion latérale 21 et 22 correspondante et l'évasement interne 122 du tube métallique 121. La protubérance carrée traverse et coulisse dans le trou oblong 23 et 24 correspondant de la portion latérale 21 et 22 de l'élément support mobile 9.

La tige de maintien 32 est supportée par quatre paliers référencés respectivement 141, 142, 143 et 144, qui appartiennent à un étrier 140. Cet étrier 140 est monté et fixé sous l'embase 19 de l'élément support fixe 8.

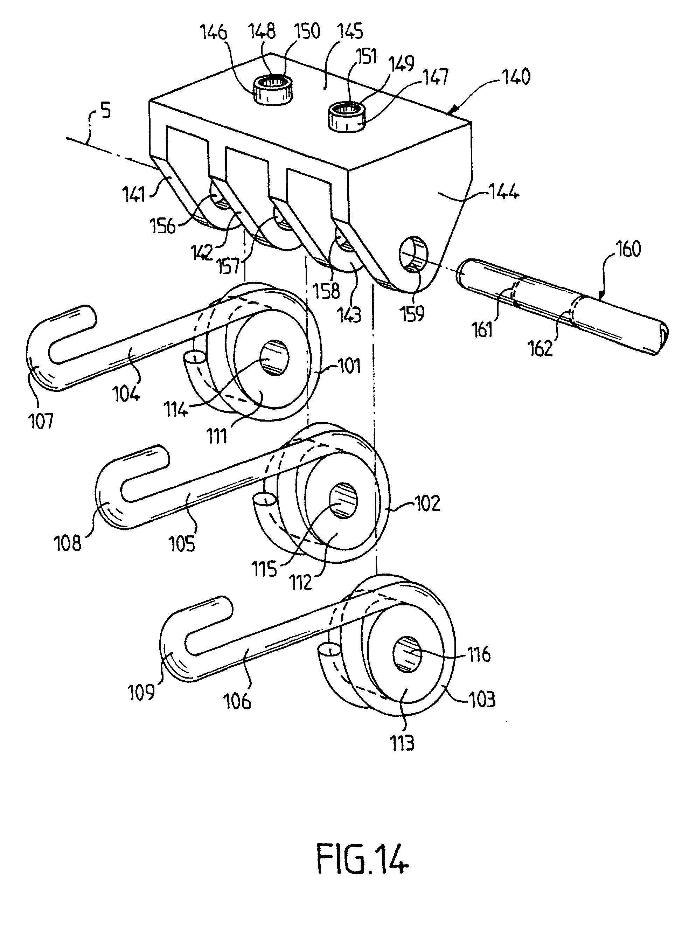

Le montage de l'étrier 140 avec le tube mince 160 sur l'élément support fixe 8 est représenté en détail sur la figure 14.

L'embase 19 de l'élément support fixe 8 est munie de deux trous évasés 152 et 153 avec un évasement 154 et 155.

L'étrier 140 est composé d'une embase 145 avec quatre paliers 141, 142, 143 et 144. Chacun de ces paliers possède un trou 156, 157, 158 et 159 pour le montage du tube mince 160, qui est muni de prédécoupes 161 et 162. L'embase 145 est munie de deux tenons 146 et 147 avec un trou 148 et 149, qui s'engagent dans les deux trous évasés 152 et 153. L'extrémité de chacun des tenons 146 et 147 est rabattue sur l'évasement 154 et 155 des trous 152 et 153 pour obtenir l'évasement 150 et 151.

L'axe d'accrochage 7 est constitué par trois encoches demi-circulaires 117, 118, 119 aménagées au bord de la portion de raccordement 20 appartenant à l'extrémité 39 de l'élément support mobile 9, chaque encoche 117, 118, 119 recevant l'extrémité libre 107, 108, 109 de l'enroulement correspondant 101, 102, 103, ladite extrémité libre se recourbant autour de l'encoche correspondante.

Le système de l'invention propose ainsi d'utiliser une succession d'un certain nombre d'enroulements métalliques, fixés d'un côté à une structure rigide du véhicule et de l'autre côté à une partie de la colonne de direction, qui peut coulisser lors du choc. Le mouvement de cette partie de la colonne déroule les enroulements qui absorbent l'énergie d'impact du conducteur sur le volant. Selon l'invention, afin de réaliser de façon optimale la quantité d'énergie absorbée par ce système, il faut l'adapter aux conditions au cours desquelles le choc se produit (notamment poids du conducteur, conducteur ceinturé ou non, vitesse du véhicule) pour avoir une sécurité maximale du conducteur.

L'adaptation de l'énergie absorbée par le système en fonction des conditions du choc se fait en sélectionnant un certain nombre d'enroulements. Selon l'invention, ceci se fera en fonction des informations données par des capteurs des différents paramètres entrant en jeu. Ces paramètres sont variables dans le temps, et pour s'y adapter, l'actionneur électrique 30 doit commander en permanence le mouvement linéaire d'un noyau rigide, c'est-à-dire de la tige de maintien mobile 31 ou 32 correspondante, qui sélectionne le nombre d'enroulements correspondant à l'état de ces paramètres.

## Revendications

1. Dispositif d'absorption modulable d'énergie d'une colonne de direction de véhicule automobile, qui comprend un arbre de direction (1) monté tournant dans un tube corps (2), ledit tube-corps (2) est relié à un ensemble support (6) qui est fixé au châssis (10) du véhicule, ledit dispositif d'absorption modulable d'énergie agissant dans une direction sensiblement parallèle à l'axe de direction (3) de la colonne de direction, ledit système d'absorption modulable d'énergie consistant en :
- un élément support fixe (8) qui est solidaire du châssis (10) du véhicule, et un élément support mobile (9) qui est relié à l'élément support fixe (8) afin de constituer l'ensemble support (6), l'élément support mobile (9) est relié et bloqué sur l'élément support fixe (8) à une valeur déterminée afin que ce blocage cesse en cas de choc ;
- au moins un axe de tenue (5) sensiblement perpendiculaire à l'axe de direction (3) de la colonne, qui est disposé dans l'élément support fixe (8) ; **caractérisé en ce que** ledit système d'absorption comporte:
- au moins un axe d'accrochage (7) sensiblement perpendiculaire à l'axe de direction (3) de la colonne, qui est disposé dans l'élément support mobile (9) ;
- plusieurs enroulements (41, 42, 43 ; 101, 102, 103) d'un élément métallique de section déterminée, lesdits enroulements (41, 42, 43 ; 101, 102, 103) étant reliés aux axes de tenue (5) et d'accrochage (7) ;
- les enroulements (41, 42, 43 ; 101, 102, 103) sont montés sur un ou des rouleaux (50 ; 111, 112, 113) disposés sur l'axe de tenue (5) correspondant solidaire de l'élément support fixe (8) ;
- les enroulements (41, 42, 43 ; 101, 102, 103) ont chacun une extrémité libre (47, 48, 49 ; 107, 108, 109) qui s'amarre à l'axe d'accrochage (7) correspondant disposé à l'extrémité (29, 39) de l'élément support mobile (9), ladite extrémité (29, 39) étant du côté du boîtier de direction, c'est-à-dire du côté opposé au volant de direction ;
- chaque axe d'accrochage (7) des enroulements ou chaque axe de tenue (5) des enroulements étant constitué par une tige de maintien (31, 32) mobile suivant son axe (7 et 5), par l'intermédiaire de moyens de déplacement qui sont mis en action par des moyens de commande ;
- de manière à relier l'axe d'accrochage (7) et l'axe de tenue (5) correspondant par un nombre voulu d'enroulements ;
- afin qu'en cas de choc, l'élément support mobile (9) relié au tube-corps (2) donc au volant tire l'extrémité libre (47, 48, 49 ; 107, 108, 109) des enroulements (41, 42, 43 ; 101, 102, 103) amarrée à l'axe d'accrochage (7), de façon à dérouler le ou les enroulements(s) (41, 42, 43 ; 101, 102, 103) concerné (s) en absorbant l'énergie à dissiper demandée.

2. Dispositif d'absorption modulable d'énergie selon la revendication 1, **caractérisé en ce que** la tige de maintien (31) constitue l'axe d'accrochage (7) des enroulements correspondants (41, 42, 43).

3. Dispositif d'absorption modulable d'énergie selon la revendication 1, **caractérisé en ce que** la tige de maintien (32) constitue l'axe de tenue (5) des enroulements correspondants (101, 102, 193).

4. Dispositif d'absorption modulable d'énergie selon la revendication 1, **caractérisé en ce que** les moyens de déplacement de chaque tige de maintien (31, 32) consistent en un actionneur électrique (30), qui est mis en action par des moyens de commande électrique disposés sur la planche de bord du véhicule.

5. Dispositif d'absorption modulable d'énergie selon la revendication 4, **caractérisé en ce que** l'actionneur électrique (30) est un moto-réducteur.

6. Dispositif d'absorption modulable d'énergie selon la revendication 4, **caractérisé en ce que** l'actionneur électrique (30) est un ensemble électromagnétique à noyau plongeur.

7. Dispositif d'absorption modulable d'énergie selon les revendications 2 et 4, **caractérisé en ce que**
- l'élément support fixe (8) comporte une embase (19) avec deux oreilles (11, 12) sensiblement verticales entre lesquelles vient s'engager, l'élément support mobile (9), chacune des oreilles (11, 12) ayant un trou ou passage (13, 14) de l'axe de tenue (5) ;
- l'élément support mobile (9) comporte deux portions latérales (21, 22) et une portion de raccordement (20) ;
- chacune des portions latérales (21, 22) ayant à sa partie supérieure un trou oblong (23, 24) de passage de l'axe de tenue (5), dont la longueur correspond à la course de la récupération d'énergie ;
et **en ce qu'**il comporte :
- une tige de maintien (31) avec un actionneur électrique (30), ladite tige de maintien (31) constituant l'axe d'accrochage (7) qui est disposé à l'extrémité (29) de l'élément support mobile (9) ;
- un axe de tenue (5) qui est disposé sur l'élément support fixe (8) ;
- trois enroulements (41, 42, 43) montés sur un rouleau (50), qui est disposé autour de l'axe de tenue (5), chaque enroulement (41, 42, 43) étant muni d'une portion rectiligne (44, 45, 46) ayant sensiblement la même direction que l'effort à amortir, chaque portion rectiligne (44, 45, 46) se prolongeant par une extrémité libre (47, 48, 49) recourbée autour de la tige de maintien (31).

8. Dispositif d'absorption modulable d'énergie selon la revendication 7, **caractérisé en ce que** l'axe de tenue (5) est constitué par une tige (52) avec un manchon (51), ledit manchon (51) est disposé entre les deux portions latérales (21, 22) de l'élément support mobile (9) ; ladite tige (52) est maintenue à chacune de ses deux extrémités (53, 54) par un ensemble de fixation dans l'oreille correspondante (11, 12) de l'élément support fixe (8), et par un ensemble de coulissement de l'élément support mobile (9) ; chaque ensemble de fixation est bloqué sur chacune des oreilles (11, 12) à une valeur déterminée.

9. Dispositif d'absorption modulable d'énergie selon la revendication 8, **caractérisé en ce que** chaque ensemble de fixation comprend :
- une rondelle de serrage (57) qui est disposé entre le manchon (51) et l'oreille correspondante (11, 12) de l'élément support fixe (8), ladite rondelle de serrage (57) est munie d'un tube (58) traversant le trou oblong (23, 24) de la portion latérale (21, 22) correspondante de l'élément support mobile (9) ;
- une extrémité filetée (53, 54) correspondante de la tige (52) traverse le tube (58) de la rondelle de serrage (57) et traverse le trou de passage (13, 14) de l'oreille correspondante (11, 12) pour recevoir un écrou (79) de serrage, qui s'applique sur ladite oreille (11, 12) afin d'assurer le blocage de l'ensemble de fixation à une valeur déterminée.

10. Dispositif d'absorption modulable d'énergie selon la revendication 9, **caractérisé en ce que** chaque ensemble de coulissement comporte :
- une rondelle externe (61) avec une protubérance carrée (62) et une rondelle interne (59) munie d'un trou carré (60) qui reçoit ladite protubérance carrée (62) ;
- ladite protubérance carrée (62) a un trou de passage (63) du tube (58) de la rondelle de serrage (57) ;
- la rondelle externe (61) est disposée entre l'oreille (11, 12) correspondante de l'élément support fixe (8) et la portion latérale (21, 22) correspondante de l'élément support mobile (9) ;
- la rondelle interne (59) est disposée entre ladite portion latérale (21, 22) et la rondelle de serrage (57) ;
- la protubérance carrée (62) traverse et coulisse dans le trou oblong correspondant (23, 24) de l'élément support mobile (9).

11. Dispositif d'absorption modulable d'énergie selon la revendication 8, **caractérisé en ce que** la tige (52) a une de ses deux extrémités qui est constituée par une extrémité filetée (53) et l'autre extrémité qui est constituée par une tête (179) s'appliquant sur l'oreille (12) correspondante de l'élément support fixe (8).

12. Dispositif d'absorption modulable d'énergie selon la revendication 7, **caractérisé en ce que** l'axe d'accrochage (7) est constitué par :
- la tige de maintien (31) avec son actionneur électrique (30) disposé et fixé sur la face d'appui externe (73) de l'élément d'appui mobile (9) ;
- ladite tige de maintien (31) traverse un trou de passage (37, 38) de chacune des portions latérales (21, 22) de l'élément d'appui mobile (9), et elle est supportée par deux paliers (81, 82) appartenant à un étrier (80) monté et fixé sur la portion de raccordement (20), de l'extrémité (29) de l'élément support mobile (9) ;
- un élément de fermeture (90) de l'étrier (80) entoure l'extrémité (29) de l'élément support mobile (9), l'étrier (80) et les extrémités libres (47, 48, 49) des enroulements (41, 42, 43), ledit élément de fermeture (90) étant assemblé avec l'élément support mobile (9) et l'étrier (80).

13. Dispositif d'absorption modulable d'énergie selon les revendications 3 et 4, **caractérisé en ce que** :
- l'élément support fixe (8) comporte une embase (19) avec deux oreilles (11, 12) sensiblement verticales entre lesquelles vient s'engager, l'élément support mobile (9), chacune des oreilles (11, 12) ayant un trou de passage (13, 14) de l'axe de tenue (5) ;
- l'élément support mobile (9) comporte deux portions latérales (21, 22) et une portion de raccordement (20) ;
- chacune des portions latérales (21, 22) ayant à sa partie supérieure un trou oblong (23, 24) de passage de l'axe de tenue (5), dont la longueur correspond à la course de la récupération d'énergie ;
et **en ce qu'**il comporte :
- une tige de maintien (32) avec un actionneur électrique (30), ladite tige de maintien (32) constituant l'axe de tenue (5), qui est disposé dans l'élément support fixe (8) ;
- un axe d'accrochage (7) qui est disposé à l'extrémité (39) de l'élément support mobile (9) ;
- trois enroulements (101, 102, 103) sont montés chacun sur un rouleau (111, 112, 113), qui est disposé autour de la tige de maintien (32), chaque enroulement (101, 102, 103) étant muni d'une portion rectiligne (104, 105, 106) ayant sensiblement la même direction que l'effort à amortir, chaque portion rectiligne (104, 105, 106) se prolongeant par une extrémité libre (107, 108, 109) recourbée autour de l'axe d'accrochage (7) ; les trois rouleaux (111, 112, 113) étant montés sur un tube (160) dans lequel coulisse la tige de maintien (32).

14. Dispositif d'absorption modulable d'énergie selon la revendication 13, **caractérisé en ce que** l'axe de tenue (5) est constitué par :
- la tige de maintien (32) avec son actionneur électrique (30) disposé et fixé sur la face externe (18) de l'oreille (12) correspondante de l'élément d'appui fixe (8) ;
- l'axe de tenue (5) est réalisé à chacune de ses extrémités par un ensemble de fixation dans l'oreille correspondante (11, 12) de l'élément support fixe (8), et par un ensemble de coulissement de la portion latérale (21, 22) correspondante de l'élément support mobile (9) ; chaque ensemble de fixation est bloqué sur chacune des oreilles (11, 12) à une valeur déterminée ;
- la tige de maintien (32) traversant ou s'engageant dans l'ensemble de fixation correspondant.

15. Dispositif d'absorption modulable d'énergie selon la revendication 14, **caractérisé en ce que** chaque ensemble de fixation comprend :
- un tube métallique (121) qui traverse le trou oblong (23, 24) de la portion latérale (21, 22) correspondante de l'élément support mobile (9), et qui traverse le trou de passage (13, 14) de l'oreille (11, 12) correspondante ;
- un évasement interne (122) est agencé du côté de ladite portion latérale (21, 22) et un évasement externe (123) est agencé du côté de ladite oreille (11, 12) afin d'assurer le blocage de l'ensemble de fixation ;
- un trou de passage (124) de la tige de maintien (32).

16. Dispositif d'absorption modulable d'énergie selon la revendication 15, **caractérisé en ce que** chaque ensemble de coulissement comporte :
- une rondelle externe (131) avec une demi-protubérance carrée (132) et un trou de passage (133);
- une rondelle interne (125) avec une demie-protubérance carrée (126) et un trou de passage (127);
- chaque demie-protubérance (126, 132) s'emboîtant dans l'autre rondelle (131, 125) à l'aide de tenons (128, 134) rentrant dans des trous (129, 135) pour former une protubérance carrée ;
- la rondelle externe (131) est disposée entre l'oreille (11, 12) correspondante de l'élément support fixe (8) et la portion latérale (21, 22) correspondante de l'élément support mobile (9) ;
- la rondelle interne (125) est disposée entre ladite portion latérale (21, 22) et l'évasement interne (122) du tube métallique (121) ;
- la protubérance carrée traverse et coulisse dans le trou oblong (23, 24) correspondant de la portion latérale (21, 22) de l'élément support mobile (9).

17. Dispositif d'absorption modulable d'énergie selon la revendication 14, **caractérisé en ce que** la tige de maintien (32) est supportée par quatre paliers (141, 142, 143, 144) appartenant à un étrier (140) monté et fixé sous l'embase (19) de l'élément support fixe (8).

18. Dispositif d'absorption modulable d'énergie selon la revendication 13, **caractérisé en ce que** l'axe d'accrochage (7) est constitué par trois encoches demi-circulaires (117, 118, 119) aménagées au bord de la portion de raccordement (20) appartenant à l'extrémité (39) de l'élément support mobile (9), chaque encoche (117, 118, 119) recevant l'extrémité libre (107, 108, 109) de l'enroulement correspondant (101, 102, 103), ladite extrémité libre se recourbant autour de l'encoche correspondante.

19. Dispositif d'absorption modulable d'énergie selon l'une quelconque des revendications précédentes, **caractérisé en ce que** l'adaptation de l'énergie absorbée se fait en fonction des conditions du choc, et des informations variables dans le temps qui sont données par différents capteurs des différents paramètres entrant en jeu, afin que l'actionneur électrique (30) sélectionne en permanence le nombre voulu d'enroulements, en commandant en permanence le mouvement linéaire de la tige de maintien (31, 32) mobile correspondante.

## Claims

1. A system for modulatable absorption of energy from an automobile vehicle steering column which comprises a steering shaft (1) rotatably mounted in a body-tube (2), said body-tube (2) being connected to a support assembly (6) which is fixed to the chassis (10) of the vehicle, which modulatable energy absorption system operates in a direction substantially parallel to the steering axis (3) of the steering column, said modulatable energy absorption system consisting of :
- a fixed support member (8) which is fastened to the chassis (10) of the vehicle, and a mobile support member (9) which is connected to the fixed support member (8) to constitute the support assembly (6), the mobile support member (9) is connected to and locked on the fixed support member (8) to a determined value whereby the locking is overcome in the event of an impact ;
- at least one retaining pin (5) arranged in the fixed support member (8) substantially perpendicular to the steering axis (3) of the steering column;
**characterized in that** said absorption system comprises:
- at least one anchor pin (7) arranged in the mobile support member (9) substantially perpendicular to the steering axis (3) of the steering column,
- a plurality of windings (41, 42, 43 ; 101, 102, 103) formed from a metal member of determined section, said windings (41, 42, 43 ; 101, 102, 103) being connected to the retaining (5) and anchor (7) pins,
- the windings (41, 42, 43 ; 101, 102, 103) are mounted on one or more rollers (50 ; 111, 112, 113) mounted on the corresponding retaining pin (5) fastened to the fixed support member (8) ;
- the windings (41, 42, 43 ; 101, 102, 103) each have a free end (47, 48, 49 ; 107, 108, 109) which is anchored to the corresponding anchor pin (7) arranged at the end (29, 39) of the mobile support member (9), said end (29, 39) being on the same side as a steering box, i.e. on the opposite side to a steering wheel ;
- each anchor pin (7) for the windings or each retaining pin (5) for the windings comprising a holding rod (31, 32) movable along its axis (7 and 5), by displacement means which are activated by control means ;
- to connect the corresponding anchor pin (7) and retaining pin (5) by a desired number of windings ;
- so that in the event of an impact the mobile support member (9), which is connected to the body-tube (2) and therefore to the steering wheel pulls on the free end (47, 48, 49 ; 107, 108, 109) of the windings (41, 42, 43 ; 101, 102, 103) attached to the anchor pin (7), to unwind the winding(s) (41, 42, 43 ; 101, 102, 103) concerned while absorbing the required energy to be dissipated.

2. A modulatable energy absorption system according to claim 1, **characterized in that** the holding rod (31) constitutes the anchor pin (7) of the corresponding windings (41, 42, 43).

3. A modulatable energy absorption system according to claim 1, **characterized in that** the holding rod (32) constitutes the retaining pin (5) of the corresponding windings (101, 102, 193).

4. A modulatable energy absorption system according to claim 1, **characterized in that** the displacement means for each holding rod (31, 32) consist of an electric actuator (30), which is activated by electric control means disposed on the dashboard of the vehicle.

5. A modulatable energy absorption system according to claim 4, **characterized in that** the electric actuator (30) is a gear motor.

6. A modulatable energy absorption system according to claim 4, **characterized in that** the electric actuator (30) is an electromagnetic device with a movable plunger.

7. A modulatable energy absorption system according to claims 2 and 4, **characterized in that**
- the fixed support member (8) includes a base (19) with two substantially vertical lugs (11, 12) between which the mobile support member (9) engages, each of the lugs (11, 12) having a hole (13, 14) through which the retaining pin (5) passes;
- the mobile support member (9) has two lateral portions (21, 22) and one connection portion (20);
- each of the lateral portions (21, 22) having an oblong hole (23, 24) at the top through which the retaining pin (5) passes and whose length corresponds to an energy recovery travel ;
and **in that** it includes:
- a holding rod (13) with an electric actuator (30), said holding rod (31) constituting the anchor pin (7) which is arranged at the end (29) of the mobile support member (9) ;
- a retaining pin (5) which is arranged on the fixed support member (8) ;
- three windings (41, 42, 43) mounted on a roller (50), which is arranged around the retaining pin (5), each winding (41, 42, 43) having a rectilinear portion (44, 45, 46) extending in substantially the same direction as a force to be damped, each rectilinear portion (44, 45, 46) having a free end (47, 48, 49) curved around the holding rod (31).

8. A modulatable energy absorption system according to claim 7, **characterized in that** the retaining pin (5) comprises a rod (52) with a sleeve (51), said sleeve (51) is arranged between the two lateral portions (21, 22) of the mobile support member (9) ; said rod (52) is held at each of its two ends (53, 54) by a fixing assembly on the corresponding lug (11, 12) of the fixable support member (8), and by a sliding assembly of the mobile support member (9) ; each fixing assembly is locked on each of the lugs (11, 12) to a determined value.

9. A modulatable energy absorption system according to claim 8, **characterized in that** each fixing assembly comprises :
- a clamping washer (57) which is arranged between the sleeve (51) and the corresponding lug (11, 12) of the fixed support member (8), said clamping washer (57) has a tube (58) passing through the oblong hole (23, 24) in the corresponding lateral portion (21, 22) of the mobile support member (9) ;
- a corresponding screwthreaded end (53, 54) of the rod (52) passes through the tube (58) of the clamping washer (57) and passes through the passage hole (13, 14) of the corresponding lug (11, 12) to receive a clamping nut (79) which is pressed onto said lug (11, 12) to lock the fixing assembly to a determined value.

10. A modulatable energy absorption system according to claim 9, **characterized in that** each sliding assembly includes :
- an outer washer (61) with a square protuberance (62) and an inner washer (59) with a square hole (60) which receives said square protuberance (62) ;
- said square protuberance (62) has a hole (63) through which the tube (58) of the clamping washer (57) passes ;
- the outer washer (61) is arranged between the corresponding lug (11, 12) of the fixed support member (8) and the corresponding lateral portion (21, 22) of the mobile support member (9) ;
- the inner washer (59) is arranged between said lateral portion (21, 22) and the clamping washer (57) ;
- the square protuberance (62) passes through and slides in the corresponding oblong hole (23, 24) of the mobile support member (9).

11. A modulatable energy absorption system according to claim 8, **characterized in that** the rod (52) has one of its two ends which is constituted by a screwthreaded end (53) and the other end which is constituted by a head (179) pressed onto the corresponding lug (12) of the fixed support member (8).

12. A modulatable energy absorption system according to claim 7, **characterized in that** the anchor pin (7) is constituted by :
- the holding rod (31) with its electric actuator (30) mounted on and fixed to the outer bearing face (73) of the mobile support member (9) ;
- said holding rod (31) passes through a hole (37, 38) in each of the lateral portions (21, 22) of the mobile support member (9) and is supported by two bearings (81, 82) forming part of a stirrup (80) mounted on and fixed on the connecting portion (20) of the end (29) of the mobile support member (9) ;
- a closure member (90) of the stirrup (80) surrounds the end (29) of the mobile support member (9), the stirrup (80) and the free ends (47, 48, 49) of the windings (41, 42, 43), said closure member (90) being assembled to the mobile support member (9) and the stirrup (80).

13. A modulatable energy absorption system according to claims 3 and 4, **characterized in that** :
- the fixed support member (8) includes a base (19) with two substantially vertical lugs (11, 12) between which the mobile support member (9) engages, each of the lugs (11, 12) having a hole (13, 14) through which the retaining pin (5) passes ;
- the mobile support member (9) has two lateral portions (21, 22) and a connecting portion (20) ;
- each of the lateral portions (21, 22) having an oblong hole (23, 24) at the top through which the retaining pin (5) passes and whose length corresponds to the energy recovery travel ;
and **in that** it includes :
- a holding rod (32) with an electric actuator (30), said holding rod (32) constituting the retaining pin (5), which is arranged in the fixed support member (8) ;
- an anchor pin (7) which is arranged at the end (39) of the mobile support member (9) ;
- three windings (101, 102, 103) are each mounted on a roller (111, 112, 113), which is arranged around the holding rod (32), each winding (101, 102, 103) having a rectilinear portion (104, 105, 106) extending in substantially the same direction as a force to be damped, each rectilinear portion (104, 105, 106) having a free end (107, 108, 109) curved around the anchor pin (7) ; the three rollers (111, 112, 113) being mounted on a tube (160) in which the holding rod (32) slides.

14. A modulatable energy absorption system according to claim 13, **characterized in that** the retaining pin (5) is constituted by:
- the holding rod (32) with its electric actuator (30) mounted on and fixed to the outside face (18) of the corresponding lug (12) of the fixed support member (8),
- each of the ends of the retaining pin (5) has a fixing assembly in the corresponding lug (11, 12) of the fixed support member (8), and a sliding assembly for the corresponding lateral portion (21, 22) of the mobile support member (9) ; each fixing assembly is locked on each of the lugs (11, 12) to a determined value ;
- the holding rod (32) passing through or engaging in the corresponding fixing assembly.

15. A modulatable energy absorption system according to claim 14, **characterized in that** each fixing assembly comprises:
- a metal tube (121) which passes through the oblong hole (23, 24) of the corresponding lateral portion (21, 22) of the mobile support member (9), and which passes through the hole (13, 14) in the corresponding lug (11, 12) ;
- an inner flare (122) is arranged on the same side as said lateral portion (21, 22) and an outer flare (123) is arranged on the same side as said lug (11, 12) thereby immobilizing the fixing assembly ;
- a hole (124) through which the holding rod (32) passes.

16. A modulatable energy absorption system according to claim 15, **characterized in that** each sliding assembly includes :
- an outer washer (131) with a square half-protuberance (132) and a hole (133) through it ;
- an inner washer (125) with a square half-protuberance (126) and hole (127) through it ;
- each half-protuberance (126, 132) nesting in the other washer (131, 125) by means of tenons (128, 134) entering holes (129, 135) to form a square protuberance,
- the outer washer (131) is arranged between the corresponding lug (11, 12) of the fixed support member (8) and the corresponding lateral portion (21, 22) of the mobile support member (9) ;
- the inner washer (125) is arranged between said lateral portion (21, 22) and the inner flare (122) of the metal tube (121) ;
- the square protuberance passes through and slides in the corresponding oblong hole (23, 24) in the lateral portion (21, 22) of the mobile support member (9).

17. A modulatable energy absorption system according to claim 14, **characterized in that** the holding rod (32) is supported by four bearings (141, 142, 143, 144) forming part of a stirrup (140) mounted and fixed under the base (19) of the fixed support member (8).

18. A modulatable energy absorption system according to claim 13, **characterized in that** the anchor pin (7) is constituted by three semi-circular notches (117, 118, 119) in an edge of the connecting portion (20) which is part of the end (39) of the mobile support member (9), each notch (117, 118, 119) receiving the free end (107, 108, 109) of the corresponding winding (101, 102, 103), said free end curving around the corresponding notch.

19. A modulatable energy absorption system according to any one of preceding claims, **characterized in that** the absorbed energy is adapted according to the conditions of the impact and information varying in time which are supplied by various sensors of various relevant parameters, so that the electric actuator (30) at all times selects a desired number of windings and correspondingly controls the linear movement of the corresponding mobile holding rod (31, 32).

## Patentansprüche

1. Modulierbare Energieabsorptionseinrichtung einer Kraftfahrzeuglenksäule, die aus einer Lenkwelle (1) besteht, die drehbar in einem Rohrkörper (2) angebracht ist, wobei der genannte Rohrkörper (2) mit einer Trageinheit (6) verbunden ist, die an der Karosserie (10) des Fahrzeuges befestigt ist, wobei die genannte modulierbare Energieabsorptionseinrichtung in einer Richtung wirkt, die zur Richtung der Mittellinie (3) der Lenksäule im wesentlichen parallel ist, wobei das genannte modulierbare Energieabsorptionssystem besteht aus:
- einem festen Tragteil (8), der mit der Karosserie (10) des Fahrzeuges fest verbunden ist, und einem beweglichen Tragteil (9), der mit dem festen Tragteil (8) verbunden ist, um die Trageinheit (6) zu bilden, wobei das bewegliche Tragteil (9) mit dem festen Tragteil (8) verbunden und auf ihm mit einem bestimmten Wert blockiert ist, damit die Blockierung im Fall eines Stoßes nachgibt,
- mindestens eine zur Mittellinie (3) der Säule im wesentlichen senkrechte Halteachse (5), die im festen Tragteil (8) angeordnet ist,
**dadurch gekennzeichnet, dass** das genannte modulierbare Energieabsorptionssystem aufweist:
- mindestens eine zur Mittellinie (3) der Säule im wesentlichen senkrechte Einhakachse (7), die im beweglichen Tragteil (9) angeordnet ist,
- mehrere Wicklungen (41, 42, 43; 101, 102, 103) eines Metallteiles bestimmten Querschnittes, wobei die genannten Wicklungen (41, 42, 43; 101, 102, 103) mit der Halteachse (5) und der Einhakachse (7) verbunden sind,
- wobei die Wicklungen (41, 42, 43; 101, 102, 103) auf einer oder mehreren Rollen (50; 111, 112, 113) angebracht sind, die auf der entsprechenden Halteachse (5) angeordnet sind, die mit dem festen Tragteil (8) fest verbunden ist,
- wobei die Wicklungen (41, 42, 43; 101, 102, 103) jeweils ein freies Ende (47, 48, 49; 107, 108, 109) haben, das an der entsprechenden Einhakachse (7) verankert wird, die am Ende (29, 39) des beweglichen Tragteils (9) angeordnet ist, wobei das genannte Ende (29, 39) sich auf der Seite des Lenkgehäuses befindet, das heißt auf der dem Lenkrad entgegengesetzten Seite,
- wobei jede Einhakachse (7) der Wicklungen oder jede Halteachse (5) der Wicklungen aus einer Haltestange (31, 32) besteht, die in Achsenrichtung (7 und 5) durch Verschiebungsmittel beweglich ist, die von Betätigungsmitteln betätigt werden,
- so dass die Einhakachse (7) mit der entsprechenden Halteachse (5) durch eine gewünschte Wicklungszahl verbunden sind,
- so dass im Fall eines Stoßes das bewegliche Tragteil (9), das mit dem Rohrkörper (2), also mit dem Lenkrad verbunden ist, das freie Ende (47, 48, 49; 107, 108, 109) der Wicklungen (41, 42, 43; 101, 102, 103), das an der Einhakachse (7) verankert ist, derart zieht, dass die betreffenden Wicklung(en) (41, 42, 43; 101, 102, 103) unter Aufnahme der verlangten zu zerstreuenden Energie abgerollt werden.

2. Modulierbare Energieabsorptionseinrichtung nach Patentanspruch 1, **dadurch gekennzeichnet, dass** die Haltestange (31) die Einhakachse (7) der entsprechenden Wicklungen (41, 42, 43) bildet.

3. Modulierbare Energieabsorptionseinrichtung nach Patentanspruch 1, **dadurch gekennzeichnet, dass** die Haltestange (32) die Halteachse (5) der entsprechenden Wicklungen (101, 102, 103) bildet.

4. Modulierbare Energieabsorptionseinrichtung nach Patentanspruch 1, **dadurch gekennzeichnet, dass** die Verschiebungsmittel jeder Haltestange (31, 32) aus einem elektrischen Wirkglied (30) bestehen, das durch elektrische Betätigungsmittel betätigt wird, die auf dem Armaturenbrett des Fahrzeuges angeordnet sind.

5. Modulierbare Energieabsorptionseinrichtung nach Patentanspruch 4, **dadurch gekennzeichnet, dass** das elektrische Wirkglied (30) ein Getriebemotor ist.

6. Modulierbare Energieabsorptionseinrichtung nach Patentanspruch 4, **dadurch gekennzeichnet, dass** das elektrische Wirkglied (30) eine elektromagnetische Anordnung mit Tauchanker ist.

7. Modulierbare Energieabsorptionseinrichtung nach den Patentansprüchen 2 und 4, **dadurch gekennzeichnet, dass**
- das feste Tragteil (8) eine Sitzplatte (19) mit zwei im wesentlichen vertikalen Lappen (11, 12) trägt, zwischen die das bewegliche Tragteil (9) eingreift, wobei jeder der Lappen (11, 12) ein Durchtrittsloch (13, 14) für die Halteachse (5) aufweist,
- das bewegliche Tragteil (9) zwei Seitenabschnitte (21, 22) aufweist und einen Befestigungsabschnitt (20),
- wobei jeder der Seitenabschnitte (21, 22) in seinem oberen Teil ein Langloch (23, 24) für den Durchtritt der Halteachse (5) aufweist, dessen Länge dem Energierückgewinnungsweg entspricht,
und dadurch, dass sie aufweist:
- eine Haltestange (31) mit einem elektrischen Wirkglied (30), wobei die genannte Haltestange (31) die Einhakachse (7) bildet, die am Ende (29) des beweglichen Tragteils (9) angeordnet ist,
- eine Halteachse (5), die auf dem festen Tragteil (8) angeordnet ist,
- drei auf einer Rolle (50), die um die Halteachse (5) angeordnet ist, angebrachte Wicklungen (41, 42, 43), die jeweils mit einem geradlinigen Abschnitt (44, 45, 46) versehen sind, der im wesentlichen dieselbe Richtung hat, wie die aufzunehmende Kraft, wobei jeder geradlinige Abschnitt (44, 45, 46) sich in einem freien Ende (47, 48, 49) fortsetzt, das um die Haltestange (31) zurückgebogen ist.

8. Modulierbare Energieabsorptionseinrichtung nach Patentanspruch 7, **dadurch gekennzeichnet, dass** die Halteachse (5) aus einer Stange (52) mit einer Hülse (51) besteht, wobei die genannte Hülse (51) zwischen den beiden Seitenabschnitten (21, 22) des beweglichen Tragteiles (9) angeordnet ist und die genannte Stange (52) an jedem ihrer beiden Enden (53, 54) durch eine Befestigungsanordnung im entsprechenden Lappen (11, 12) des festen Tragteiles (8) gehalten wird, und durch eine Gleitanordnung des beweglichen Tragteiles (9), wobei jede Befestigungsanordnung mit einem bestimmten Wert auf jedem der Lappen (11, 12) blockiert ist.

9. Modulierbare Energieabsorptionseinrichtung nach Patentanspruch 8, **dadurch gekennzeichnet, dass** jede Befestigungsanordnung umfasst:
- eine Klemmscheibe (57), die zwischen der Hülse (51) und dem entsprechenden Lappen (11, 12) des festen Tragteiles (8) angeordnet ist, wobei die genannte Klemmscheibe (57) mit einem Rohr (58) versehen ist, das das Langloch (23, 24) des entsprechenden Seitenabschnittes (21, 22) des beweglichen Tragteiles (9) durchquert,
- wobei ein entsprechendes gewindetes Ende (53, 54) der Stange (52) das Rohr (58) der Klemmscheibe (57) und das Durchtrittsloch (13, 14) des entsprechenden Lappens (11, 12) durchquert, um eine Klemmmutter (79) aufzunehmen, die sich an den genannten Lappen (11, 12) anlegt, um die Blockierung der Befestigungsanordnung mit einem bestimmten Wert sicherzustellen.

10. Modulierbare Energieabsorptionseinrichtung nach Patentanspruch 9, **dadurch gekennzeichnet, dass** jede Gleitanordnung umfasst:
- eine äußere Scheibe (61) mit einem quadratischen Vorsprung (62) und eine innere Scheibe (59), versehen mit einem quadratischen Loch (60), das den genannten quadratischen Vorsprung (62) aufnimmt,
- wobei der genannte quadratische Vorsprung (62) ein Durchtrittsloch (63) für das Rohr (58) der Klemmscheibe (57) aufweist,
- wobei die äußere Scheibe (61) zwischen dem entsprechenden Lappen (11, 12) des festen Tragteiles (8) und dem entsprechenden Seitenabschnitt (21, 22) des beweglichen Tragteiles (9) angeordnet ist,
- wobei die innere Scheibe (59) zwischen dem genannten Seitenabschnitt (21, 22) und der Klemmscheibe (57) angeordnet ist,
- wobei der quadratische Vorsprung (62) das entsprechende Langloch (23, 24) des beweglichen Tragteiles (9) durchquert und darin gleitet.

11. Modulierbare Energieabsorptionseinrichtung nach Patentanspruch 8, **dadurch gekennzeichnet, dass** die Stange (52) ein Ende als gewindetes Ende (53) und das andere Ende als Kopf (179) ausgebildet hat, der sich an den entsprechenden Lappen (12) des festen Tragteiles (8) anlegt.

12. Modulierbare Energieabsorptionseinrichtung nach Patentanspruch 7, **dadurch gekennzeichnet, dass** die Einhakachse (7) besteht aus:
- der Halteachse (31) mit ihrem elektrischen Wirkglied (30), angeordnet und befestigt auf der äußeren Anlagefläche (73) des beweglichen Tragteiles (9),
- wobei die genannte Haltestange (31) ein Durchtrittsloch (37, 38) jedes der Seitenabschnitte (21, 22) des beweglichen Tragteiles (9) durchquert und von zwei Lagern (81, 82) getragen wird, die einem Bügel (80) angehören, der auf dem Befestigungsabschnitt (20) des Endes (29) des beweglichen Tragteiles (9) angebracht und befestigt ist,
- wobei ein Schließteil (90) des Bügels (80) das Ende (29) des beweglichen Tragteiles (9) umgibt, den Bügel (80) und die freien Enden (47, 48, 49) der Wicklungen (41, 42, 43), wobei das genannte Schließteil (90) mit dem beweglichen Tragteil (9) und dem Bügel (80) zusammengesetzt ist.

13. Modulierbare Energieabsorptionseinrichtung nach den Patentansprüchen 3 und 4, **dadurch gekennzeichnet, dass**
- das feste Tragteil (8) eine Sitzplatte (19) mit zwei im wesentlichen vertikalen Lappen (11, 12) trägt, zwischen die das bewegliche Tragteil (9) eingreift, wobei jeder der Lappen (11, 12) ein Durchtrittsloch (13, 14) für die Halteachse (5) aufweist,
- das bewegliche Tragteil (9) zwei Seitenabschnitte (21, 22) aufweist und einen Befestigungsabschnitt (20),
- jeder der Seitenabschnitte (21, 22) in seinem oberen Teil ein Langloch (23, 24) für den Durchtritt der Halteachse (5) aufweist, dessen Länge dem Energierückgewinnungsweg entspricht,
und dadurch, dass sie aufweist:
- eine Haltestange (32) mit einem elektrischen Wirkglied (30), wobei die genannte Haltestange (32) die Halteachse (5) bildet, die im festen Tragteil (8) angeordnet ist,
- eine Einhakachse (7), die am Ende (39) des beweglichen Tragteiles (9) angeordnet ist,
- drei auf je einer Rolle (111, 112, 113), die um die Haltestange (32) angeordnet ist, angebrachte Wicklungen (101, 102, 103), die jeweils mit einem geradlinigen Abschnitt (104, 105, 106) versehen sind, der im wesentlichen dieselbe Richtung hat, wie die aufzunehmende Kraft, wobei jeder geradlinige Abschnitt (104, 105, 106) sich in einem freien Ende (107, 108, 109) fortsetzt, das um die Einhakachse (7) zurückgebogen ist, wobei die drei Rollen (111, 112, 113) auf einem Rohr (160) montiert sind, in dem die Haltestange (32) gleitet.

14. Modulierbare Energieabsorptionseinrichtung nach Patentanspruch 13, **dadurch gekennzeichnet, dass** die Halteachse (5) besteht aus:
- der Haltestange (32) mit ihrem elektrischen Wirkglied (30), angeordnet und befestigt auf der Außenfläche (18) des entsprechenden Lappens (12) des festen Tragteiles (8),
- wobei die Halteachse (5) an jedem ihrer Enden aus einer Anordnung zur Befestigung im entsprechenden Lappen (11, 12) des festen Tragteiles (8) besteht und aus einer Gleitanordnung des entsprechenden Seitenabschnittes (21, 22) des beweglichen Tragteiles (9), wobei jede Befestigungsanordnung mit einem bestimmten Wert auf jedem der Lappen (11, 12) blockiert ist,
- wobei die Haltestange (32) die entsprechende Befestigungsanordnung durchquert oder in sie eingreift.

15. Modulierbare Energieabsorptionseinrichtung nach Patentanspruch 14, **dadurch gekennzeichnet, dass** jede Befestigungsanordnung umfasst:
- ein Metallrohr (121), das das Langloch (23, 24) des entsprechenden Seitenabschnittes (21, 22) des beweglichen Tragteiles (9) durchquert und das Durchtrittsloch (13, 14) des entsprechenden Lappens (11, 12),
- wobei eine innere Ausbauchung (122) auf der Seite des genannten Seitenabschnittes (21, 22) und eine äußere Ausbauchung (123) auf der Seite des genannten Lappens (11, 12) ausgebildet ist, um die Blockierung der Befestigungsanordnung sicherzustellen,
- ein Durchtrittsloch (124) für die Haltestange (32).

16. Modulierbare Energieabsorptionseinrichtung nach Patentanspruch 15, **dadurch gekennzeichnet, dass** jede Gleitanordnung umfasst:
- eine äußere Scheibe (131) mit einem quadratischen Halbvorsprung (132) und einem Durchtrittsloch (133),
- eine innere Scheibe (125) mit einem quadratischen Halbvorsprung (126) und einem Durchtrittsloch (127),
- wobei jeder Halbvorsprung (126, 132) mit Hilfe von Zapfen (128, 134), die in Löcher (129, 135) eintreten, in die andere Scheibe (131, 125) passt, um einen quadratischen Vorsprung zu bilden,
- wobei die äußere Scheibe (131) zwischen dem entsprechenden Lappen (11, 12) des festen Tragteiles (8) und dem entsprechenden Seitenabschnitt (21, 22) des beweglichen Tragteiles (9) angeordnet ist,
- wobei die innere Scheibe (125) zwischen dem genannten Seitenabschnitt (21, 22) und der inneren Ausbauchung (122) des Metallrohres (121) angeordnet ist,
- wobei der quadratische Vorsprung das entsprechende Langloch (23, 24) des Seitenabschnittes (21, 22) des beweglichen Tragteiles (9) durchquert und darin gleitet.

17. Modulierbare Energieabsorptionseinrichtung nach Patentanspruch 14, **dadurch gekennzeichnet, dass** die Haltestange (32) von vier Lagern (141, 142, 143, 144) getragen wird, die einem Bügel (140) angehören, der unter der Sitzplatte (19) des festen Tragteiles (8) angebracht und befestigt ist.

18. Modulierbare Energieabsorptionseinrichtung nach Patentanspruch 13, **dadurch gekennzeichnet, dass** die Einhakachse (7) aus drei halbkreisförmigen Kerben (117, 118, 119) besteht, die am Rand des Befestigungsabschnittes (20) ausgebildet sind, der dem Ende (39) des beweglichen Tragteiles (9) angehört, wobei jede Kerbe (117, 118, 119) das freie Ende (107, 108, 109) der entsprechenden Wicklung (101, 102, 103) aufnimmt, wobei das genannte freie Ende um die entsprechende Kerbe gebogen ist.

19. Modulierbare Energieabsorptionseinrichtung nach irgendeinem der vorangehenden Patentansprüche, **dadurch gekennzeichnet, dass** die Einstellung der aufgenommenen Energie in Abhängigkeit von den Stoßbedingungen und zeitlich veränderlichen Informationen erfolgt, die von verschiedenen Sensoren der verschiedenen eine Rolle spielenden Parameter geliefert werden, damit das elektrische Wirkglied (30) laufend die gewünschte Wicklungsanzahl auswählt, indem es laufend die lineare Bewegung der entsprechenden beweglichen Haltestange (31, 32) regelt.
